Europäisches Patentamt

European Patent Office

Office européen des brevets

(11) Veröffentlichungsnummer: **0 358 014**
**A2**

(12) **EUROPÄISCHE PATENTANMELDUNG**

(21) Anmeldenummer: 89115269.6

(22) Anmeldetag: 18.08.89

(51) Int. Cl.5: **A01B 35/16**

(30) Priorität: 08.09.88 HU 462188

(43) Veröffentlichungstag der Anmeldung:
14.03.90 Patentblatt 90/11

(84) Benannte Vertragsstaaten:
AT BE CH DE ES FR GB GR IT LI LU NL SE

(71) Anmelder: **AGRIKON MEZÖGAZDASAGI GEPGYARTO ÜZLETAG**
**Dozsa György u. 44**
**Kiskörös(HU)**

(72) Erfinder: **Horváth, Benedek**
**Szirom u. 26**
**Kecskemét(HU)**
Erfinder: **Horváthné, Cecilia Raffai**
**Szirom u. 26**
**Kecskemét(HU)**
Erfinder: **Zöld, Ferenc**
**Lenin u. 2**
**Jakabszállás(HU)**

(74) Vertreter: **Patentanwälte Viering & Jentschura**
**Steinsdorfstrasse 6**
**D-8000 München 22(DE)**

(54) **Rollhacke.**

(57) Rollhacke (Rotationshacke), die mit einer Nabe, einer Achse, Lagern und bearbeitenden Zähnen versehen ist und dadurch gekennzeichnet ist, daß sie auf einer Tragkonstruktion (28) individuell aufgehängt ist, und zwar derweise, daß die Rückneigung der Drehachse (15) des Hackenkörpers (3) im Verhältnis zu der Senkrechten auf die Bodenoberfläche in der Ebene der Fahrtrichtung (19) 0-75°, die seitliche Neigung in der zu der Fahrtrichtung senkrecht verlaufenden Ebene 3-75° beträgt; der Hackenkörper (3) eine Radnabe (9) und mehrere gewölbte Zähne (7) enthält, die aus der erwähnten Nabe radial hinausreichen und im Verhältnis zu der natürlichen Drehrichtung (14) während der Arbeitsdurchführung nach rückwärts gebogen sind, die Zähne (7) so angeordnet sind, daß sie beim Schleppen in den Boden eindringend dort eine die Fahrtrichtung (19) kreuzende Bewegung ausführen, während die Symmetrieachse des Querschnitts (16) des in den Boden eindringenden Zahns (7) im Verhältnis zu der Drehachse so eingestellt ist, daß diese im Moment des Erreichens des Bodens vorteilhaft vertikal verläuft, derart, daß der von der Drehebene (26) des Hackenrads (6) und der Bodenoberfläche eingeschlosse Winkel (α) mit dem von der Symmetrieachse (25) des Zahnquerschnitts (16, 16a) und der Drehachse (15) eingeschlossenen Winkel (τ) übereinstimmt (α = τ).

Fig 1

Xerox Copy Centre

## Rollhacke

Die Erfindung betrifft eine Rollhacke (sich drehender Hackenkörper), die primär als eine Rotationsmaschine zur Bodenbestellung dient, insbesondere zur Bodenlockerung, als Unkrautbekämpfungsgerät, Schollenbrecher und zur Durchführung sonstiger Grundfunktionen der Bodenbearbeitung geeignet ist.

Im Laufe der Entwicklung der Bearbeitungsgeräte entstanden als Erfolg der Wechselwirkung zwischen dem technischen Niveau und agrotechnischen Kenntnissen die verschiedenen Bodenbearbeitungsmaschinen, die sich weniger oder mehr verbreiteten.

Die grundsätzliche Zielsetzung der Schaffung der Werkzeuge bestand darin, vorteilhafte Anbaubedingungen für die nützlichen Kulturpflanzen sicherzustellen.

Die Größe des Bodenertrags der landwirtschaftlichen Produktion hatte jene Werkzeuge bestimmt, die aus den zur Verfügung stehenden Lösungen und unter den gegebenen Bedingungen sich verbreiteten. Um einen erfolgreichen Bodenertrag gewährleisten zu können, müssen gut verdichtete und abgesetzte Beete, die von Unkräutern frei sind, vorbereitet werden.

Später muß das Unkraut aus den Reihen zwischen den Beeten gejätet werden, die Bodenoberflächen müssen durch Auflockerung in der Tiefe von 2-6 cm belüftet werden. Die rückbleibenden Pflanzenstengel werden mit Erde überdeckt. Eine weitere Aufgabe besteht darin, die bodenverbessernden Materialien und unkrautvertilgenden Chemikalien mit dem Boden zu vermischen.

Die beschriebenen Arbeitsgänge beanspruchen zahlreiche Arbeitsmaschinen, das bedeutet, daß der Boden mit verschiedenen Arbeitsmaschinen je einzelnen zu befahren ist.

Eine schonende Bearbeitung der Bodenstruktur beansprucht die Anwendung solcher Bestellungsgeräte, die gleichzeitig mehrere Arbeitsgänge durchzuführen fähig sind.

Darüberhinaus beansprucht die Inbetriebhaltung vieler Arbeitsmaschinen einen hohen Kostenaufwand. Infolge des erhöhten Anspruches an Zugkraft sind die Bestellungsgeräte, die nur einzelne Arbeitsgänge durchführen können, äußerst kostspielig.

Die genannten Ausführungen zusammenfassend werden solche Bodenbestellungsgeräte benötigt, deren Bearbeitungswerkzeuge die Möglichkeit bieten, mehrere Aufgaben der Bodenbestellung im Laufe eines einzigen Arbeitsgangs durchführen zu können.

Aus der Fachliteratur, aus Patentschriften und aus der Praxis sind einige Lösungen bekannt, die mehr oder weniger diese Forderungen befriedigen.

Als solche möchten wir die DE-A-1 457 716, US-A-3 650 334 und DE-A-1 457 714 erwähnen. Diese Druckschriften spezifizieren Rotorhacken, die aus einer zentralen Nabe und radial vorragenden - während der Arbeitsdurchführung im Verhältnis zu der natürlichen Drehrichtung nach rückwärts gebogenen -Zähnen bestehen.

Die gemeinsame Charakteristik der geschilderten Lösungen besteht darin, daß die Drehachse der Hacken mit der Bodenoberfläche parallel verläuft.

Die Hackenräder bilden auf einer gemeinsamen Welle drehende Einheiten, Hackengruppen.

Gegenüber der Fahrtrichtung ist die Drehachse der Hackengruppen unter einem von 90° abweichenden Winkel eingestellt. Eine weitere Charakteristik besteht darin, daß diese Maschinen ausschließlich zur Bodenlockerung zwischen den Pflanzenreihen geeignet sind.

Es wird als nachteilig betrachtet, daß die mit einem Hackenrad bearbeitbare Bodenstreifenbreite äußerst klein ist, die Masse ist verhältnismäßig groß, die Bedienung ist schwierig.

Obiges zusammenfassend befriedigen diese Geräte die funktionellen Forderungen der Bodenbearbeitung überhaupt nicht.

Infolge der großen Masse kommen Zahnbrüche oft vor, die Eindringungsfähigkeit der Zähne in den Boden ist keinesfalls befriedigend, die Unkrautbekämpfung entspricht den Vorschriften der entsprechenden Normen nicht.

Eine weiterentwickelte Lösung ist aus der US-A-3 766 988 zu erkennen. Der Querschnitt der Zähne weist eine Gestaltung auf, die das Eindringen in den Boden in vertikaler Richtung ermöglicht.

In der DE-A-2 528 928 ist eine Lösung bekanntgegeben, bei der zwecks Eliminierung des Zahnbruches die Hackenräder einzeln aufgehängt sind.

Wie es aus den geschilderten Ausführungsbeispielen eindeutig hervorgeht, werden diese Maschinen bel in einem eingeschränkten Bereich, zur Durchführung spezieller Aufgaben der Bodenbearbeitung eingesetzt. Als solche Zielaufgaben sollen das Zerbröckeln der 1-2 cm dicken Oberflächenschicht, die das Durchbrechen der Keimpflanzen aus dem Boden verhindert, die Unkrautvernichtung, Belüftung des Bodens zwischen den Pflanzenreihen, die Unkrautvernichtung zwischen den Pflanzenreihen und die kleineren Rückenbauten auf dem aufgelockerten Boden erwähnt werden. Bei der landwirtschaftlichen Produktion übertrifft die gemeinsame Verwendung nicht einmal 1-2% der auf die Bodenbearbeitung angewendeten Gesamtzeit.

Aus den genannten Ausführungen geht hervor, daß der Anteil der Maschinen mit Rotorhacken an der Durchführung von Bodenbearbeitungen gegenwärtig gering ist. Sonstige Bearbeitungsmittel weisen verschiedene Typen und Ausführungsformen auf.

Es soll als charakteristische Tatsache erwähnt werden, daß zur Auflockerung des Bodens verschiedene Aufgrabmaschinen, zur Überdeckung der zurückbleibenden pflanzlichen Stiele Pflüge und Scheibenpflüge, zur Bodenverdichtung verschiedene Zylinder eingesetzt werden; Rückenbau findet mit auffüllenden Hackenkörpern statt, Unkrautvernichtung beansprucht Kultivatorhacken, zum Schollenschlagen verwendet man Schollenschlagzylinder, während Stengelrückstände mit speziellen Schneidscheiben zerstückelt werden, unkrautvertilgende Chemikalien und bodenverbessernde Materialien werden mit Scheiben oder Spatenmessern usw. in den Boden eingemischt usw.

Über die vorerwähnten Mittel kann festgestellt werden, daß diese neben den vorteilhaften Eigenschaften auch Mangelhaftigkeiten aufweisen; falls diese vermieden werden, können wir einen bedeutenden wirtschaftlichen Gewinn erzielen.

Als Beispiel soll erwähnt werden, daß die Pflüge und mit Scheiben versehene Bodenbearbeitungsmittel die Schollen umwerfen, gleichzeitig aber üben sie eine negative Einwirkung auf die Feuchtigkeitswirtschaft des bestellten Bodens aus. Die Aufgrabmaschinen und Kultivatorhacken sammeln Unkraut, pflanzliche Stengelrückstände, Zweigstücke, wodurch sie oft verstopft werden. Die zur Unkrautvernichtung dienenden Kultivatorhacken müssen täglich oder jeden zweiten Tag mit manueller Schmiedearbeit oder auf sonstige Weise geschärft werden, andernfalls können sie nicht in den Boden eindringen.

Mit Ausnahme der Pflüge können die meisten Bodenbearbeitungsmittel nur im Bereich der niedrigen Bodenfeuchtigkeiten mit vorteilhaften Parametern betrieben werden. Der Rückenbau aus den kleinen Schollen kann mit den bekannten Mitteln nur umständlich und mit einem hohen Kostenaufwand realisiert werden, Unkrautvernichtung an den Seiten der Rücken, Auflockerung, Bedeckung der zurückgebliebenden pflanzlichen Stiele, Vermischen mit Erde können nur mit Schwierigkeiten vorgenommen werden.

Das Problem des "entsprechend abgesetzten Bodenzustands" der Aussaat vorangehend ist überhaupt nicht gelöst.

Demnach besteht die Zielsetzung der Erfindung nicht nur darin, die Mangelhaftigkeiten der bekannten Lösungen zu vermeiden, sondern das Anwendungsgebiet zu erweitern und eine Versorgung mit besseren Parametern sicherzustellen und eine universelle multifunktionelle Bodenbearbeitungsmaschine zu entwickeln, die zum gleichwertigen Ersatz eines großen Anteils der gegenwärtig üblichen Mittel geeignet ist.

Dementsprechend hat die Erfindung zur Aufgabe, ein Werkzeug zur Bodenbearbeitung zu entwickeln, das energiesparend und für mehrere Bodentypen geeignet ist, gleichzeitig mehrere Bodenbearbeitungstätigkeiten ausführt; einen verstopfungsfreien Betrieb, gute Unkrautvernichtung, entsprechenden Aufbruch der Schollen gewährleistet, den Boden gut vermischt und Rückstände der pflanzlichen Stiele geeignet überdeckt, Bodenplanierung, Verdichtung des Bodens und Rückenbau ermöglicht. Die Lebensdauer der Zähne soll lang sein, sie sollen ausgewechselt werden können, bei Aussetzung der Maschine sollen die Zähne gegen Bruch gesichert sein.

Demnach bezieht sich die Erfindung auf eine Rollhacke (Rotationshacke) zur Durchführung der Grundfunktionen der Bodenbearbeitung. Die Hacke wird durch die Charakteristik bestimmt, daß sie individuell aufgehängt ist, und zwar derweise, daß die Rückneigung der Drehachse des Hackenkörpers gegenüber der Senkrechten auf die Bodenoberfläche in der in Fahrtrichtung gelagerten Ebene 0 bis 75°, die Seitenneigung in der zu der Fahrtrichtung senkrechten Ebene 3 bis 75° beträgt.

Der Hackenkörper enthält eine Radnabe und mehrere Spiralzähne, die radial nach außen, von der Nabe ausgehend hervorragen. Im Verhältnis zu der natürlichen Drehrichtung während der Arbeitsdurchführung sind die Zähne nach rückwärts gebogen. Die Zähne sind so angeordnet, daß sie beim Schleppen in den Boden eindringend eine die Fahrtrichtung kreuzende Bewegung ausführen. Die Lage des in den Boden eindringenden Messers ist im Verhältnis zu der Drehachse ist so eingestellt, daß im Moment des Erreichens der Bodenoberfläche zweckmäßig ein Schnitt in vertikaler Richtung ermöglicht wird, das bedeutet, daß der von der Drehebene des Hackenrads und der Bodenoberfläche eingeschlossene Winkel mit dem von der Symmetrieachse des Zahnschnitts und der Drehachse eingeschlossenen Winkel übereinstimmt.

Im Sinne einer vorteilhaften Ausführungsform der Erfindung liegen die Schneidkanten der Zähne der Drehhacken entlang einer Ebene oder der Mantelfläche irgendwelchen Drehkörpers.

Es wird ebenfalls als vorteilhaft betrachtet, wenn die Wölder Zähne eine Evolvente ergeben und die Zähne mit lösbarer Verbindung in der Radnabe befestigt sind.

Nach einer weiteren Ausführungsform weisen die Zähne einen trapezoiden Zahnschnitt auf, der symmetrisch ausgestaltet ist, wobei die eine Kante nach Verschleiß umgedreht werden kann, d.h. daß die Lösung zur Gestaltung von rechtsseitigen und linksseitigen Hackenräder geeignet ist.

Gleicherweise wird es als vorteilhaft betrachtet, wenn mehrere ähnliche individuell aufgehängte Hakenräder auf eine gemeinsame Tragkonstruktion montiert werden, wobei zwischen den einzelnen aufgehängten Rädern der Drehhacke und der zum Aufhängen dienenden Tragkonstruktion zweckmäßig eine einstellbare elastische Verbindung vorhanden ist.

Die Erfindung wird anhand einiger vorteilhafter Beispiele unter Bezugnahme auf die Zeichnung näher erläutert. Es zeigen:

Figur 1 die Verbindung zwischen dem Hakenkörper, Kraftmaschine und Arbeitsmaschine,

Figur 2 den strukturellen Aufbau des Hakenkörpers mit den Zahnquerschnitten,

Figur 3 Ansichten des Hackenkörpers und die einzelnen, während der Arbeit eingenommenen Stellungen,

Figur 4 die Bewegungsverhältnisse des Hakenkörpers,

Figur 5 die umkehrbare und universelle Zahnkonstruktion (rechtsseitige und linksseitige Funktionen.

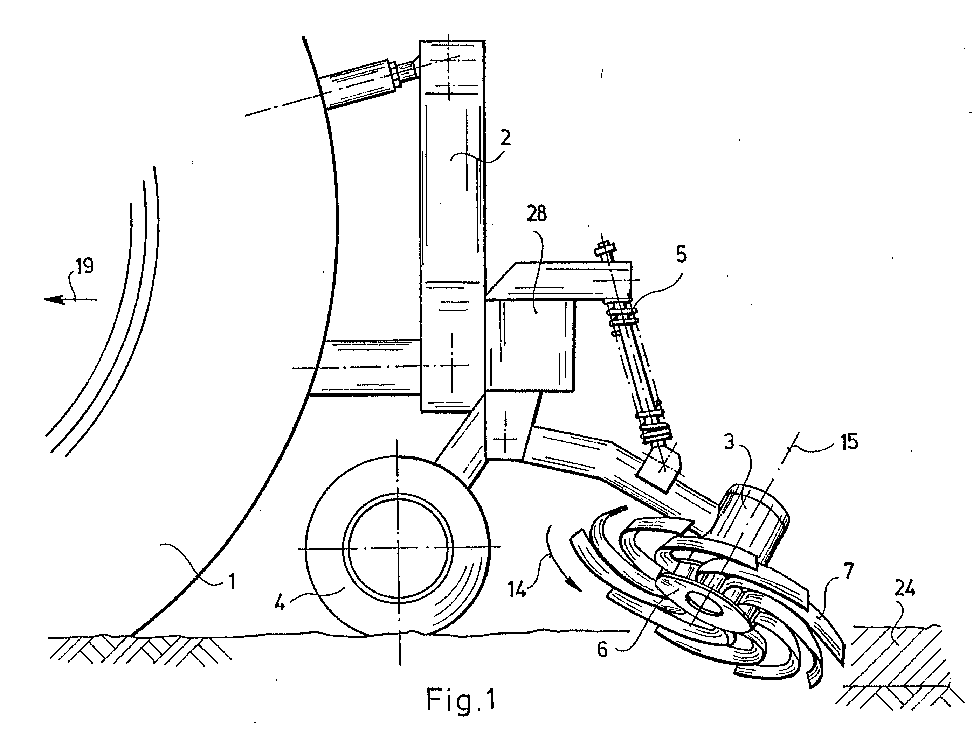

Figur 1 veranschaulicht die zweckmäßige Verbindung eines Hackenkörpers zu der Arbeitsmaschine und der Kraftmaschine. Der sich auf der Tragkonstruktion 28 befindende Hackenkörper 3 stellt gegenüber den möglichen Verbindungsarten eine bestimme Forderung, indem die Winkellage im Verhältnis auf einem konstanten Wert gehalten wird, es soll die Möglichkeit bestehen, den Geländeunebenheiten in vertikaler Richtung ohne bedeutende Änderung der Winkellage folgen zu können; eine weitere Forderung besteht darin, daß beim Steckenbleiben die Hacken zwecks Vermeidung des Zahnbruches sich aus dem Boden 24 herausheben und nach dem Überfahren des Hindernisses die Hacken in ihre ursprüngliche Arbeitslage zurückkehren.

Bei dieser Verbindungsweise ermöglicht das Rad 4 die Verfolgung der Geländeunebenheiten, während bei einem Steckenbleiben die Vermeidung des Bruches mit Hilfe einer Feder 5 und des Mechanismus nach Figur 1 ermöglicht wird.

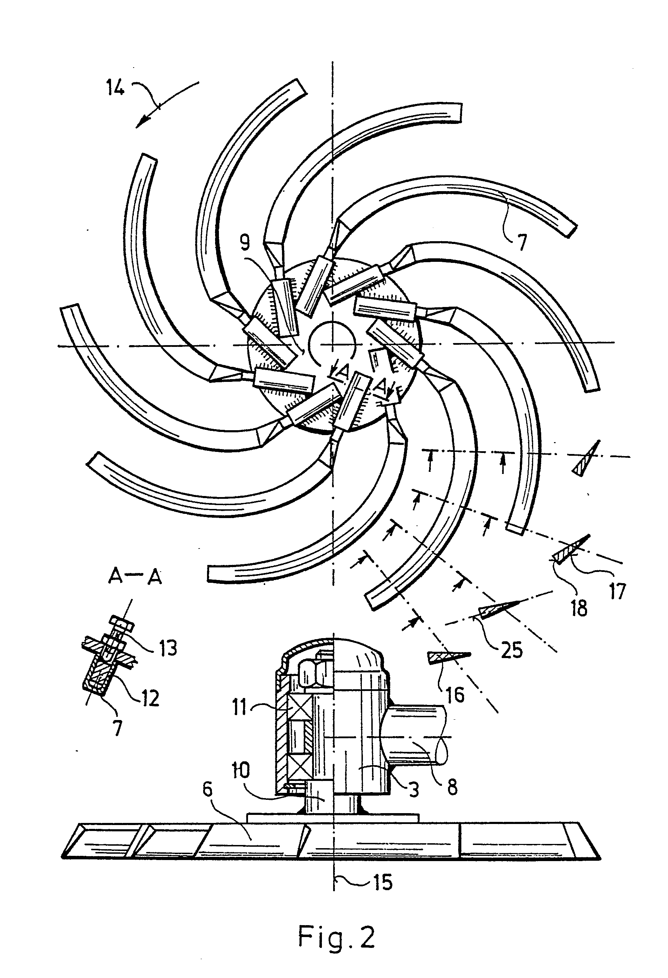

Figur 2 stellt den strukturellen Aufbau des Hackenkörpers 3 mit den Querschnitten der Zähne 7 dar.

Ein Hackenrad 6 ist an der Arbeitsmaschine 2 über eine Nabe 8 angeschlossen, in Figur 2 ist auch eine zweckmäßige Weise der Lagerung des Hackenrads 6 veranschaulicht, wo die Radnabe 9, die Achse 10 und die in die Radnabe 9 montierten Zähne 7 eine strukturelle Einheit bilden und sich in den Lagern 11 in der Nabe 8 verdrehen können.

Das Hackenrad 6 enthält die Radnabe 9 und mehrere Zähne, die von der Radnabe 9 ausgehend sich in gleichem gegenseitigen Abstand befinden, wobei die Kanten entlang der Erzeugenden irgendwelchen Drehkörpers angeordnet sind.

Jeder Zahn 7 ist gewölbt ausgestaltet und ist zu dem durch den Boden hervorgerufenen Drehsinn des Hackenrads 6 entgegengesetzt gebogen.

Der Abstand zwischen den Zähnen des Hackenrads 6 erweitert sich zweckmäßig - von der Radnabe 9 ausgehend - in Richtung zu dem äußeren Durchmesser.

Die Schnitte 16 der aus der Radnabe 9 des Hackenrads 6 radial hervorragenden, gewölbt gebogenen Zähne 7, sowie des in die Ebene der Drehachse 15 entfallenden Zahns 7 bilden entlang der Länge der Zähne 7 gleichschenkelige Dreiecke, bei denen die Breite des Zahns 17 die Schenkel des gleichschenkeligen Dreiecks,und die Höhe des Zahns 18 die kürzere Seite des Dreiecks bilden. Die Schenkel des gleichschenkeligen Dreiecks bilden die Schneiden der Zähne 7, die immer einen spitzen Winkel bilden oder zu sonstigem Schneiden geeignet ausgebildet sind.

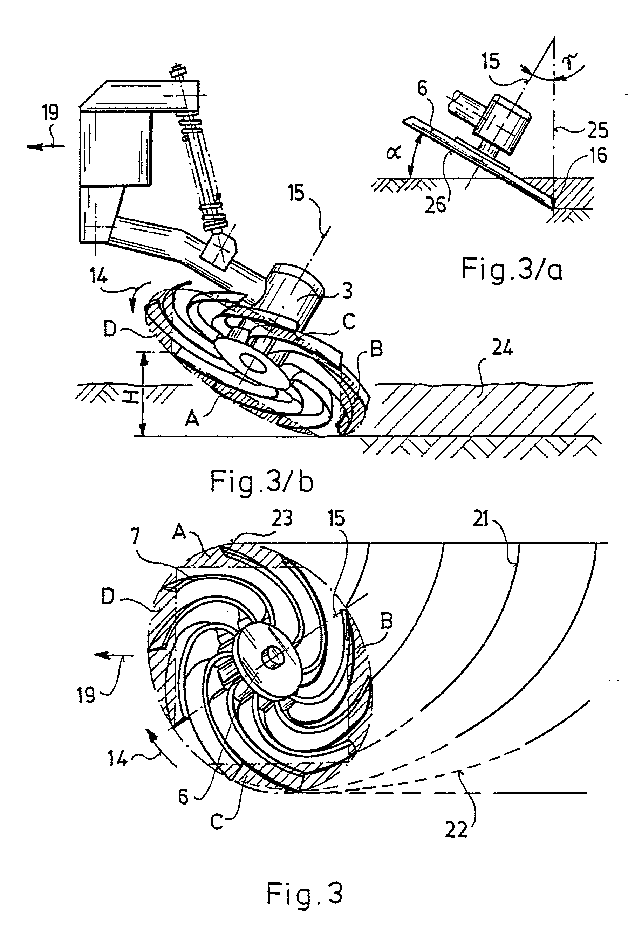

Für das Eindringen in den Boden wird bei der Gestaltung des Hackenrads 6 als vorteilhaft betrachtet, daß die Größe des von der Symmetrieachse 25 des Zahnquerschnitts 16 und der Drehachse 15 des Hackenrads 6 eingeschlossenen Winkels $\tau$ mit dem von der Bodenoberfläche oder der Drehebene 26 des Hackenrads 6 umschlossenen Winkel $\alpha$ übereinstimmt. (Siehe Figur 3a - $\alpha = \tau$).

Eine Reparatur wird dadurch erleichtert, daß bei der Gestaltung des Hackenrads 6 die Zähne 7 ausgewechselt werden können. In Figur 2 ist eine zweckmäßige Methode zur Befestigung des Zahns 7 dargestellt, zu diesem Zwecke werden in den Verbindungsbügeln 12 Befestigungsschrauben 13 mit Kontramutter verwendet.

In Figur 3 sind die Ansichten des Hackenkörpers 3 und die eingenommenen Arbeitsstellungen veranschaulicht.

Die Kraftmaschine schleppt die Arbeitsmaschine 2 in die Fahrtrichtung 19. Auf Wirkung des Schleppens gelangt das Hackenrad 6 in Drehbewegung, als Erfolg schneiden die Zähne durch den Boden.

Die Bewegung des die Schlepprichtung 19 querenden Zahns 7 kommt auf dem Boden 24 dadurch zustande, daß die Drehachse 15 des Hackenrads 6 im Verhältnis zu der Senkrechten auf die Bodenoberfläche in der Fahrtrichtung 19 bzw. in deren Ebene, unter einem Winkel 0-75$^\circ$ (zweckmäßig 30$^\circ$) zurückgeneigt ist, während sie in der zu der Fahrtrichtung 19 senkrechten Ebene unter dem Winkel 3-75$^\circ$ (zweckmäßig 20$^\circ$) nach der Seite geneigt ist.

Der Hackenkörper 3 ist zur Erfüllung der agrotechnischen Funktionen durch die räumliche relative Bewegung der Zähne 7 geeignet.

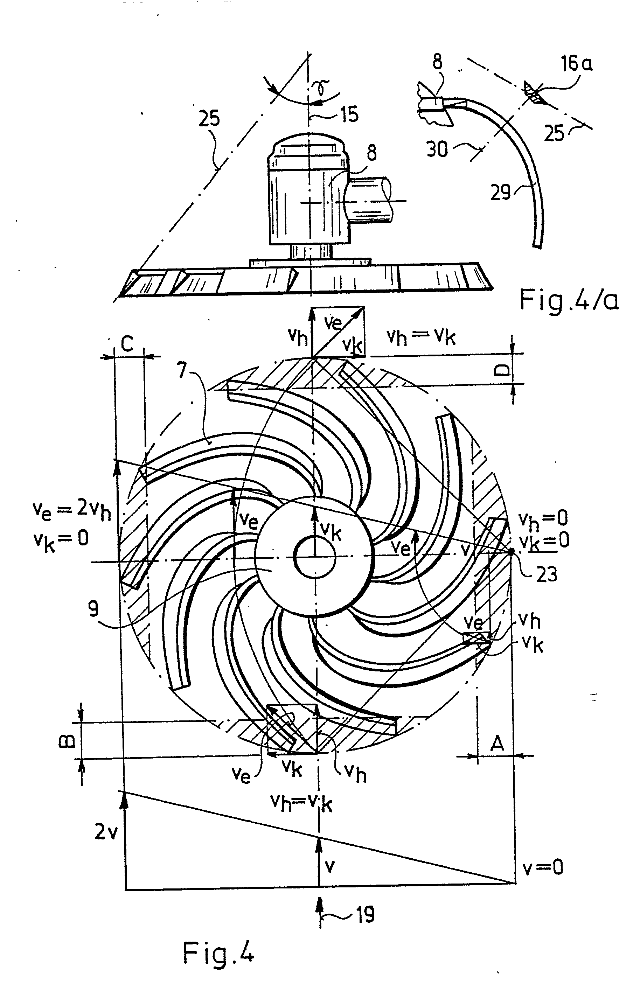

Nach den während der Versuche erworbenen Erfahrungen rollt das Hackenrad 6 entlang des von den Zahnspitzen bestimmten Außendurchmessers auf dem Boden 24. (Fig. 4)

Das momentane Zentrum 23 der Bewegung des Hackenrads 6 befindet sich nun entlang des Außendurchmessers an der mit dem Boden 24 in Berührung stehenden Seite der Zähne 7 des Hakkenrads 6 an dem von der Drehachse 15 am fernsten liegenden Punkt.

Figur 4 zeigt die Bewegungsverhältnisse des Hackenrads 6. Die Relativbewegung gegenüber dem Boden 24 wird durch das momentane Zentrum 23 des Hackenrads 6 bestimmt. In der in Figur mit "A" bezeichneten Zone ist die Verschiebung der Punkte des Hackenrads 6 in der Fahrtrichtung 19 vernachlässigbar klein. Während des Eintretens bzw. Austretens in die - bzw. aus der - Zone "A" findet eine Bewegung "H" in vertikaler Richtung statt; diese Bewegung stellt bereits eine bedeutende Verschiebung dar (Fig. 3). Derweise kann festgestellt werden, daß in der Zone "A" die Zähne 7 praktisch vertikal bewegt werden.

Dieser Umstand bestimmt die Arbeitstätigkeit des Hackenrads 6 und die zweckdienliche strukturelle Gestaltung der Zähne 7.

Die sich in vertikaler Richtung bewegenden Zähne 7 zerschneiden die zurückgebliebenen pflanzlichen Stiele, Wurzeln, Schollen, falls der Widerstand, den der Boden 24 in Form von Reaktionskraft auszuüben fähig ist, genügt.

Falls das Gefüge des Bodens 24 locker ist, werden die pflanzlichen Stielrückstände nicht durchgeschnitten; der Zahn 7 preßt nur die Rückstände in den Boden ein.

Bei Schollen ist die Situation dieselbe. In der Schicht unter der Bearbeitungstiefe üben die in den Boden 24 eingedrückten Schollen eine verdichtende Wirkung aus und homogenisieren das Bodengefüge.

Infolge der Verdrehung des Hackenrads 6 nimmt in der Zone "B" die Bewegung der Zähne 7 in der Fahrt- und Querrichtung zu, wodurch der Zahn 7 den Boden 24 durchschneidet (die Fahrtrichtung 19 wird durch eine Querbewegung gekreuzt). Währenddessen werden die Wurzeln der Pflanzen durchgeschnitten, der Boden 24 wird aufgelockert, zermürbt, wonach sich der Zahn aus dem Boden 24 vertikal hervorhebt und die pflanzlichen Stielrückstände überdeckt.

Während der Verschiebung aus dem momentanen Zentrum 23 kann die Bewegung der Zähne 7 mit einer kontinuierlichen Beschleunigung charakterisiert werden; auf dieser Tatsache beruht die gute Selbstreinigungsfähigkeit des Hackenrads 6.

Die Zone "C" stellt die Zone der Selbstreinigung dar, in der gegenüber der Bodenoberfläche in der Fahrtrichtung der Zahn 7 mit doppelter Fortschrittsgeschwindigkeit ($V_e = 2 V_h$) sich bewegt und in der Vertikalrichtung sich aus dem Boden heraushebt.

In der Zone "D" durchqueren die Zähne 7 die resultierende Bewegungsrichtung, wodurch die stehenden Unkräuter umgestürzt werden, der Boden vermischt und planiert wird.

Die momentanen Bewegungsverhältnisse der Punkte des Hackenrads 6 werden durch die relative Lage zu dem momentanen Zentrum 23 bestimmt. Figur 4 stellt die Konstruktionsweise der Größe, Richtung oder des Sinnes der resultierenden Bewegungsgeschwindigkeit $V_e$ der gegebenen Punkte des Hackenrads dar.

Die resultierende Geschwindigkeit $V_e$ kann in zwei Komponenten zerlegt werden, und zwar in der Fahrtrichtung $V_h$ und in der Querrichtung $V_k$.

In Figur 4 sind die resultierenden Bewegungsverhältnisse $V_e$ einiger wichtigerer peripherischer Punkte sowie die relativen Werte einiger Geschwindigkeitskomponenten in der Fahrtrichtung $V_h$ und in der Querrichtung $V_k$ dargestellt.

Der Charakter und die Qualität der durchzuführenden agrotechenischen Aufgaben werden auch durch den Winkel $\alpha$, den die Drehebene 26 des Hackenrads 6 mit der Bodenoberfläche einschließt, beeinflußt. (Fig. 3a).

Sollte der Winkel $\alpha$ einen kleinen Wert aufweisen, ist auch die durch das Hackenrad 6 erreichbare Arbeitstiefe geringer, bei einem größeren Wert des Winkels $\alpha$ nimmt die Tiefe proportional zu.

Bei einem kleinen Wert des Winkels $\alpha$ und bei kleinerer Zahnbreite ist die Bodenlenkung geringer, bei einem größeren Wert des Winkels $\alpha$ und bei größerer Zahnbreite 17 ist das Hackenrad 6 auch zur Erfüllung einer Auffüllungsfunktion geeignet. Wenn nun der Wert des Winkels $\alpha$ vergrößert wird, wird auch die Vermischung des Bodens günstiger sein. Die durchführbaren agrotechnischen Aufgaben hängen mit dem Zahnquerschnitt und der Zahnlage zusammen.

Der von der Drehebene 26 des Hackenrads 6 und der Bodenoberfläche eingeschlossene Winkel $\alpha$ ist mit dem von der Symmetrieachse des Zahnquerschnittes 16 und der Drehachse 15 eingeschlossenen Winkel $\tau$ übereinstimmend.

Wenn die Größe des Winkels $\alpha$ jene des Winkels $\tau$ übertrifft, nimmt die Eindringungsfähigkeit des Zahns 7 zu. Wenn der Winkel $\alpha$ den Wert des Winkels $\tau$ unterschreitet, nimmt die Eindringungsfähigkeit ab, gleichzeitig nimmt die verdichtende Wirkung zu. Die Eindringungsfähigkeit wird auch durch den Zahnspitzenwinkel des Zahns 7 und die Schneidedicke beeinflußt.

Bei kleinerer Schneide, kleinem Zahnspitzenwinkel, ist die Eindringungsfähigkeit in den Boden befriedigend, die Verdichtungswirkung nimmt ab; bei einem größeren Zahnspitzenwinkel ist die Eindringungsfähigkeit schlechter, dagegen nimmt die Verdichtungswirkung zu.

In Figur 4/a ist ein Zahn 29 veranschaulicht, der einen trapezoiden Querschnitt aufweist, wodurch das Einspannen des Zahns 29 in der Nabe im entgegengesetzten Sinne ermöglicht wird.

Die Vorteile der erfindungsgemäßen Lösung bestehen darin, daß ein universelles Bearbeitungswerkzeug zur Verfügung steht, das zu zahlreichen Arbeitsgängen der Bodenbearbeitung geeignet ist, die Mangelhaftigkeiten ähnlicher Lösungen vermeidet und die bisher in einem beschränkten Kreise verwendeten Rollhacken zur Erfüllung zahlreicher agrotechnischer Aufgaben geeignet macht.

Wie gesagt, werden alle Mangelhaftigkeiten vermieden, ein verstopfungsfreier Betrieb wird ermöglicht, die Unkrautvertilgungsmöglichkeit ist gut, infolge des wirksamen Aufbrechens der Schollen werden die auf dem lockeren Boden fortschreitenden Rollhacken zur Überdeckung der zurückgebliebenen pflanzlichen Stiele, zur Vermischung mit dem Boden geeignet, auf harten Böden werden die Pflanzenstengel zerkleinert. Es besteht die Möglichkeit, den verdichteten Zustand der bestellten Bodenschicht bis 20-30 cm zu regeln.

Die Rollhacke ist zur Bodenbestellung auf trockenem und recht feuchtem Boden, zum Rückenbau aus kleinen Schollen, zur Auflockerung der Rückenseiten, Beseitigung von Unkräutern und Bestellung von Hackpflanzen zwischen den Pflanzenreihen bestens geeignet, und zwar derweise, daß die häufige Schärfung der Hacken der Kultivatoren, mit denen zwischen den Pflanzenreihen gearbeitet wird, beseitigt wird, die Verstopfungen beschädigen die Kulturpflanzen überhaupt nicht.

Es wird eine Umdrehfunktion vorgenommen, wodurch die Bodenfeuchtigkeit bewahrt wird, die Anwendung ist wirtschaftlich, durch den überflüssigen Gang der Kraftmaschinen kann der Bodenverdichtung vorgebeugt werden, wodurch ein günstiges Bodengefüge erreicht werden kann.

## Ansprüche

1. Rollhacke (Rotationshacke), die mit einer Nabe, einer Achse, Lagern und bearbeitenden Zähnen versehen ist, dadurch gekennzeichnet, daß sie auf einer Tragkonstruktion (28) individuell aufgehängt ist, und zwar derweise, daß die Rückneigung der Drehachse (15) des Hackenkörpers (3) im Verhältnis zu der Senkrechten auf die Bodenoberfläche in der Ebene der Fahrtrichtung (19) 0-75°, die seitliche Neigung in der zu der Fahrtrichtung senkrecht verlaufenden Ebene 3-75° beträgt; der Hackenkörper (3) eine Radnabe (9) und mehrere gewölbte Zähne (7) enthält, die aus der erwähnten Nabe radial hinausreichen und im Verhältnis zu der natürlichen Drehrichtung (14) während der Arbeitsdurchführung nach rückwärts gebogen sind, die Zähne (7) so angeordnet sind, daß sie beim Schleppen in den Boden eindringend dort eine die Fahrtrichtung (19) kreuzende Bewegung ausführen, während die Symmetrieachse des Querschnitts (16) des in den Boden eindringenden Zahns (7) im Verhältnis zu der Drehachse so eingestellt ist, daß diese im Moment des Erreichens des Bodens vorteilhaft vertikal verläuft, derart, daß der von der Drehebene (26) des Hackenrads (6) und der Bodenoberfläche eingeschlosse Winkel ($\alpha$) mit dem von der Symmetrieachse (25) des Zahnquerschnitts (16, 16a) und der Drehachse (15) eingeschlossenen Winkel ($\tau$) übereinstimmt ($\alpha = \tau$).

2. Rollhacke nach Anspruch 1, dadurch gekennzeichnet, daß die Schneidkanten der Zähne (7) eine Ebene oder einen Drehkörper bestimmen.

3. Rollhacke nach Anspruch 1 oder 2, dadurch gekennzeichnet, daß die Wölbung der Zähne eine Evolvente ergibt und die Zähne mit einer lösbaren Verbindung in der Radnabe befestigt sind.

4. Rollhacke nach einem der Ansprüche 1-3, dadurch gekennzeichnet, daß der Zahn (29) mit dem trapezoiden Querschnitt (16a) symmetrisch ausgestaltet ist und nach Verschleiß der Schneiden umgedreht werden kann, so daß die Anwendung als rechtsseitiges und linksseitiges Hackenrad (6) ermöglicht wird.

5. Rollhacke nach einem der Ansprüche 1-4, dadurch gekennzeichnet, daß mehrere ähnliche ausgebildete Hackenräder (6), die individuell aufgehängt sind, auf eine gemeinsame Tragkonstruktion (28) montiert sind.

6. Rollhacke nach Anspruch 5, dadurch gekennzeichnet, daß zwischen den individuell aufgehängten Rollhackenrädern (6) und der zur Aufhängung dienenden Tragkonstruktion (28) eine einstellbare, zweckmäßig federbelastete Verbindung (5) vorgesehen ist.

Fig.1

EP 0 358 014 A2

EP 0 358 014 A2

Fig. 2

Fig.3/a

Fig.3/b

Fig.3

Fig.4/a

Fig.4